(19) Europäisches Patentamt
European Patent Office
Office européen des brevets

(11) **EP 3 330 106 B1**

(12) **EUROPEAN PATENT SPECIFICATION**

(45) Date of publication and mention
of the grant of the patent:
**29.01.2020 Bulletin 2020/05**

(51) Int Cl.:
***B60C 11/24*** *(2006.01)*  ***B60C 23/04*** *(2006.01)*
***B60C 23/06*** *(2006.01)*

(21) Application number: **17205182.3**

(22) Date of filing: **04.12.2017**

(54) **INDIRECT TIRE PRESSURE AND WEAR STATE ESTIMATION SYSTEM AND METHOD**

SYSTEM UND VERFAHREN ZUR INDIREKTEN REIFENDRUCK- UND
VERSCHLEISSZUSTANDSSCHÄTZUNG

SYSTÈME ET PROCÉDÉ D'ESTIMATION INDIRECTE DE LA PRESSION ET DE L'ÉTAT D'USURE
DE PNEUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2016 US 201662429995 P**

(43) Date of publication of application:
**06.06.2018 Bulletin 2018/23**

(73) Proprietor: **The Goodyear Tire & Rubber Company
Akron, OH 44316 (US)**

(72) Inventors:
• **SINGH, Kanwar Bharat
L-7363 Lorentzweiler (LU)**

• **HERZFELD, Eric Michael
New York, NY 10025 (US)**

(74) Representative: **Kutsch, Bernd
Goodyear S.A.
Patent Department
Avenue Gordon Smith
7750 Colmar-Berg (LU)**

(56) References cited:
EP-A1- 2 813 378    EP-A1- 2 837 510
DE-A1-102007 040 548    DE-A1-102008 056 664
US-A1- 2003 192 375

**Description**

Field of the Invention

The invention relates generally to tire monitoring systems for collecting measured tire parameter data during vehicle operation and, more particularly, to a system and a method for estimating tire inflation pressure and wear state based upon such measurements.

Background of the Invention

Vehicle-mounted tires may be monitored by tire pressure monitoring systems (TPMS) which measure tire parameters such as pressure and temperature during vehicle operation. Data from TPMS tire-equipped systems is used to ascertain the status of a tire based on measured tire parameters and alert the driver of conditions, such as low tire pressure or leakage, which may require remedial maintenance. Sensors within each tire are typically installed in a green or uncured tire and then subject to cure at high temperatures. The high temperature and pressure can damage the sensor. Furthermore, additional cost is typically associated with mounting the sensor in the tire. It is generally desired to have a tire sensor that is durable enough to sustain 60 million cycles. Further, the location of the sensor makes it extremely difficult to replace if the sensor stops functioning.

Other factors such as tire wear state are important considerations for vehicle operation and safety. It is accordingly further desirable to measure tire wear state and communicate wear state to vehicle systems such as braking and stability control systems in conjunction with the measured tire parameters of pressure and temperature.

EP 2 813 378 A1 and EP 2 837 510 each describe a tire wear estimation method and system evaluating a vertical torsional mode frequency.

DE 10 2008 056 664 A1 describes a method and device for indirect tire pressure monitoring based upon evaluation of a vertical torsional mode frequency.

US 2003/0192375 A1 describes a physical quantity estimating apparatus and tire state determining method allowing a tire type estimation.

Summary of the Invention

The invention relates to a system in accordance with claim 1 and to a method in accordance with claim 6.

Dependent claims refer to preferred embodiments of the invention.

One or more preferred embodiments of the present invention provide a tire state estimation system for determining pressure and tread depth of a tire comprising at least one tire supporting a vehicle having a tire ID, tire vertical mode measuring means for measuring tire vertical mode frequency and generating tire vertical mode frequency data, tire torsional mode measuring means for measuring tire torsional mode frequency and generating tire vertical mode frequency data, tire identification means for generating tire-specific frequency mode coefficients using tire-specific identification data, and tire state estimation means for calculating an estimation of a tire wear state and inflation pressure based upon the vertical mode frequency data, the torsional mode frequency data and the tire-specific frequency mode coefficients.

One or more preferred embodiments of the present invention provide a tire state estimation system for determining pressure and tread depth of a tire comprising at least one tire supporting a vehicle having a tire ID, tire vertical mode measuring means for measuring tire vertical mode frequency and generating tire vertical mode frequency data, tire torsional mode measuring means for measuring tire torsional mode frequency and generating tire vertical mode frequency data, tire identification means for generating tire-specific frequency mode coefficients using tire-specific identification data, and tire state estimation means for calculating an estimation of a tire wear state and inflation pressure based upon the vertical mode frequency data, the torsional mode frequency data and the tire-specific frequency mode coefficients, wherein the measurement of the tire vertical mode frequency is from a wheel-mounted accelerometer.

One or more preferred embodiments of the present invention provide a tire state estimation system for determining pressure and tread depth of a tire comprising at least one tire supporting a vehicle having a tire ID, tire vertical mode measuring means for measuring tire vertical mode frequency and generating tire vertical mode frequency data, tire torsional mode measuring means for measuring tire torsional mode frequency and generating tire vertical mode frequency data, tire identification means for generating tire-specific frequency mode coefficients using tire-specific identification data, and tire state estimation means for calculating an estimation of a tire wear state and inflation pressure based upon the vertical mode frequency data, the torsional mode frequency data and the tire-specific frequency mode coefficients, wherein the measurement of the tire torsional mode frequency is from a wheel-mounted accelerometer.

One or more preferred embodiments of the present invention provide a tire state estimation system for determining pressure and tread depth of a tire comprising at least one tire supporting a vehicle having a tire ID, tire vertical mode measuring means for measuring tire vertical mode frequency and generating tire vertical mode frequency data, tire torsional mode measuring means for measuring tire torsional mode frequency and generating tire vertical mode frequency data, tire identification means for generating tire-specific frequency mode coefficients using tire-specific identification data, and tire state estimation means for calculating an estimation of a tire wear state and inflation pressure based upon the vertical mode frequency data, the torsional mode frequency data and the tire-specific frequency mode coefficients, wherein the tire state estimation means comprises a correlation model of the tire vertical mode as a function of inflation pressure and tread wear.

One or more preferred embodiments of the present invention provide a tire state estimation system for determining pressure and tread depth of a tire comprising at least one tire supporting a vehicle having a tire ID, tire vertical mode measuring means for measuring tire vertical mode frequency and generating tire vertical mode frequency data, tire torsional mode measuring means for measuring tire torsional mode frequency and generating tire vertical mode frequency data, tire identification means for generating tire-specific frequency mode coefficients using tire-specific identification data, and tire state estimation means for calculating an estimation of a tire wear state and inflation pressure based upon the vertical mode frequency data, the torsional mode frequency data and the tire-specific frequency mode coefficients, wherein the tire state estimation means comprises a correlation model of the tire torsional mode as a function of inflation pressure and tread wear.

One or more preferred embodiments of the present invention provide a method estimating tire inflation pressure and tread depth of a tire, comprising the steps of affixing a sensor, measuring the tire vertical mode frequency and generating tire vertical mode frequency data; measuring the tire torsional mode frequency and generating tire torsional mode frequency data, generating tire-specific frequency mode coefficients using tire-specific identification data, and calculating an estimation of a tread depth and inflation pressure based upon the torsional mode frequency data, the vertical mode frequency data, and the tire-specific frequency mode coefficients.

One or more preferred embodiments of the present invention provide a method estimating tire inflation pressure and tread depth of a tire, comprising the steps of affixing a sensor, measuring the tire vertical mode frequency and generating tire vertical mode frequency data; measuring the tire torsional mode frequency and generating tire torsional mode frequency data, generating tire-specific frequency mode coefficients using tire-specific identification data, and calculating an estimation of a tread depth and inflation pressure based upon the torsional mode frequency data, the vertical mode frequency data, and the tire-specific frequency mode coefficients, wherein further comprising generating the tire-specific frequency mode coefficients using on-vehicle or in-tire measurement of a tire vertical mode frequency.

According to a preferred aspect of the invention, a tire property estimation system includes a sensor for measuring vertical acceleration and longitudinal acceleration of the tire. The sensor is preferably mounted on the wheel or rim, but may also be mounted elsewhere. The system includes mode means for determining the tire vertical mode frequency and torsional frequency; the system used tire identification for generating tire-specific frequency mode coefficients using tire-specific identification data. A tire wear estimation is made based upon the tire inflation pressure data, the vertical mode frequency data, and the tire-specific frequency mode coefficients. An indirect inflation pressure estimation is made based upon the tire wear pressure data, the torsional mode frequency data, and the tire-specific frequency mode coefficients.

Definitions

"ANN" or "Artificial Neural Network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Kalman Filter" is a set of mathematical equations that implement a predictor-corrector type estimator that is optimal in the sense that it minimizes the estimated error covariance when some presumed conditions are met.

"Lateral" means an axial direction.

"Luenberger Observer" is a state observer or estimation model. A "state observer" is a system that provide an estimate of the internal state of a given real system, from measurements of the input and output of the real system. It is typically computer-implemented, and provides the basis of many practical applications.

"MSE" is an abbreviation for Mean square error, the error between and a measured signal and an estimated signal which the Kalman Filter minimizes.

"PSD" is Power Spectral Density (a technical name synonymous with FFT (Fast Fourier Transform).

"Radial" and "radially" means directions radially toward or away from the axis of rotation of the tire.

Brief Description of the Drawings

The invention will be described by way of example and with reference to the accompanying drawings in which:

FIG. 1 is a tire property estimation system schematic diagram.
FIG. 2 is a logic flow diagram for determining a correlation model of tire vertical mode as a function of inflation pressure and tread depth.
FIG. 3 is a logic flow diagram for determining a correlation model of tire torsional mode as a function of inflation pressure and tread depth.
FIG. 4 is a schematic illustrating the model of a tire shown as a spring mass damper system.
FIG. 5 is a frequency graph showing an amplitude vs. frequency of the vertical acceleration signal, and particularly illustrating wheel hop and tire vertical mode.
FIG. 6 is a frequency graph showing an amplitude vs. frequency comparison of the vertical mode at different inflation pressure levels.
FIG. 7 is a frequency graph showing amplitude vs. frequency comparison of the vertical mode of a tire inflated to 42 psi at four different tread depths.
FIG. 8 is a tire vertical mode frequency vs. tire inflation pressure graph showing the vertical mode frequency curves at four different tread depths.
FIG. 9 is a three-dimensional graph showing the "goodness" of model fit, showing tire vertical mode frequency vs. tread depth and pressure.
FIG. 10 is a tire vertical mode frequency vs tire inflation pressure showing "goodness" of model fit.
FIG. 11 is a tire vertical mode frequency vs tire tread depth showing "goodness" of model fit.
FIG. 12 is a schematic illustrating the model of a tire shown as a torsional spring mass damper system.
FIG. 13 is a frequency graph showing an amplitude vs. frequency of the longitudinal acceleration signal, and particularly illustrating first torsional mode and second torsional mode.
FIG. 14 is a frequency graph showing an amplitude vs. frequency comparison of the longitudinal acceleration signal of the first torsional mode at different inflation pressure levels.
FIG. 15 is a frequency graph showing cumulative probability vs. frequency of the longitudinal mode at different inflation pressure levels.
FIG. 16 is a frequency graph showing multiple curves of tire first torsional mode vs. tire inflation pressure at four different tread depths.
FIG. 17 is a frequency graph showing an amplitude vs. frequency comparison of the longitudinal acceleration signal of the second torsional mode at different inflation pressure levels.
FIG. 18 is a frequency graph showing multiple curves of tire second torsional mode vs. tire inflation pressure at four different tread depths.
FIG. 19 is a three-dimensional graph showing the "goodness" of model fit, showing tire torsional mode frequency vs. tread depth and pressure.

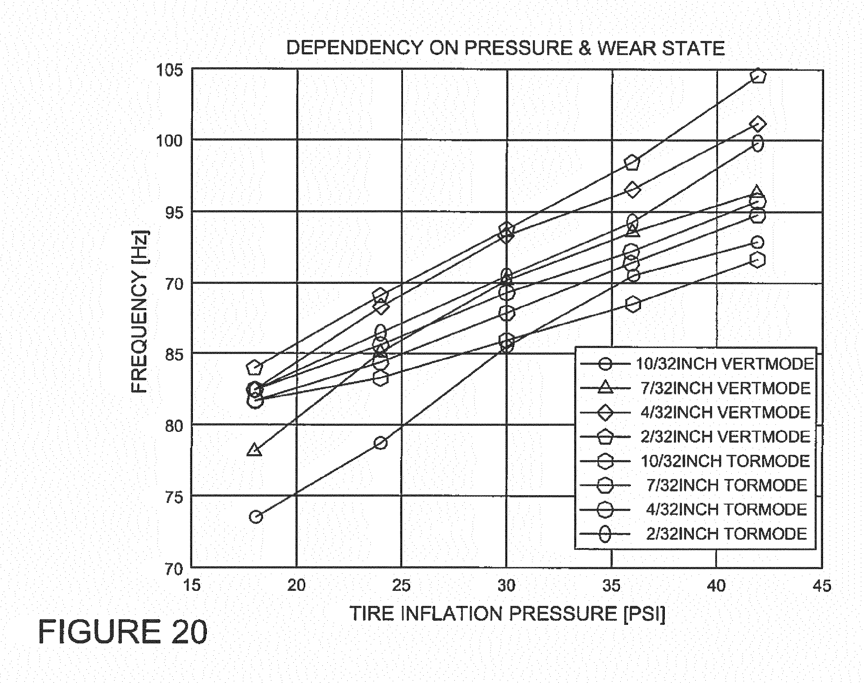

FIG. 20 illustrates a graph of frequency vs. tire inflation pressure for multiple curves of varying tread depth both in the vertical mode and torsional mode.

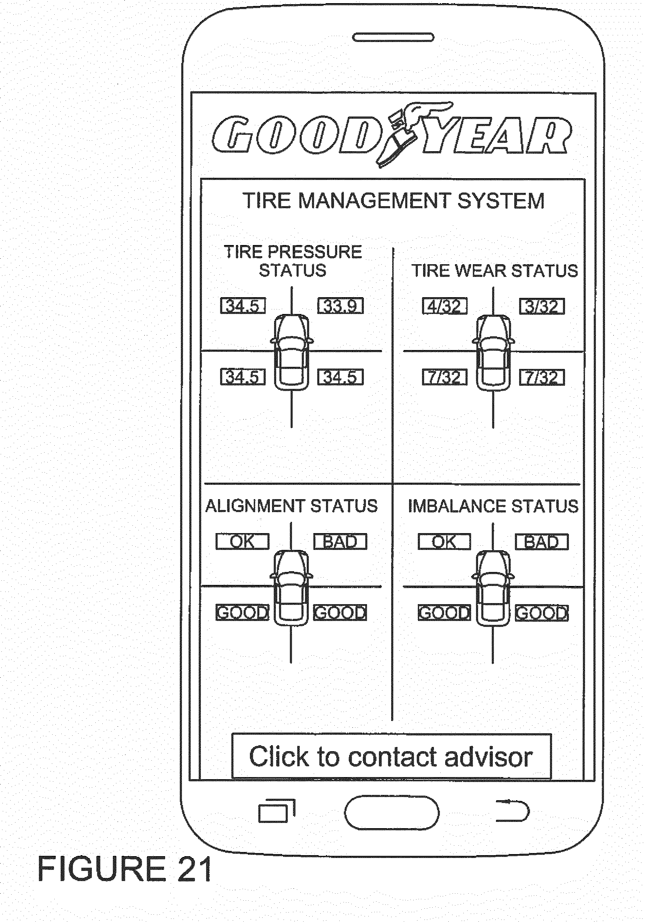

FIG. 21 illustrates how the output from the system may be communicated to a user via a cell phone network.

Detailed Description of Example Embodiments of the Invention

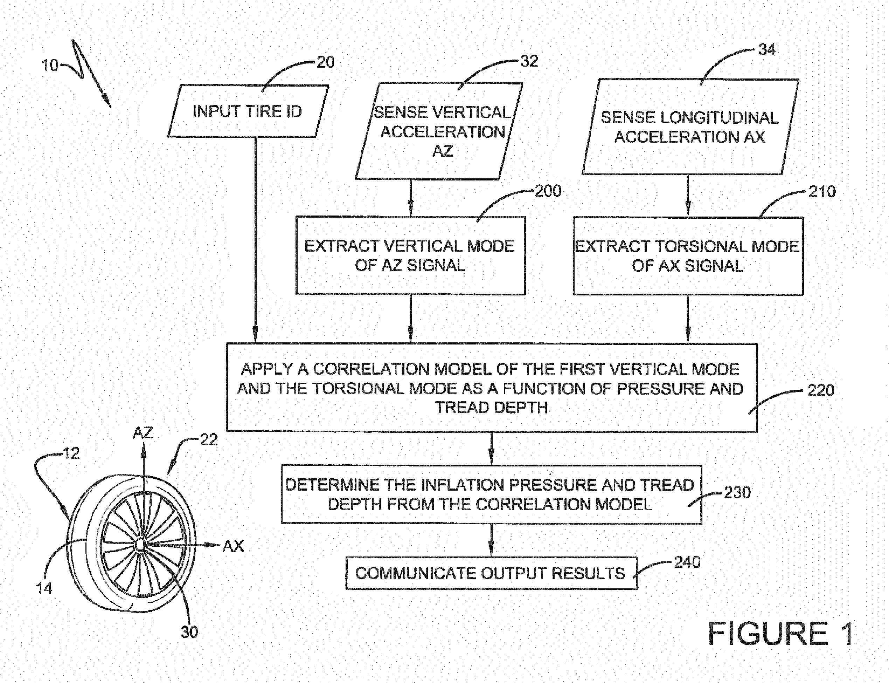

Referring to FIG. 1, a tire property estimation system 10 is shown based on spectral analysis of the tire vibration signal. Such a system is useful in advising a vehicle owner on when to change tires and may be used to provide a driver with information on the tire inflation pressure and wear state of each tire. Tire properties generally change as a function of tire wear and temperature.

A representative tire 12 is typically mounted to a vehicle and includes a ground-engaging tread region 14 that wears over time. A first input to tire property estimation system 10 is tire identification or tire ID 20. The tire ID 20 may be input to the tire property estimation system 10 by a tag on the tire, or input by a user, or may be supplied by communication with a tire pressure monitoring system module (TPMS). The tire ID 20 includes tire size and tire model. Preferably, the tire ID is a unique tire identifier that if different for each tire. For that purpose, the tire ID may include a unique tire identification number that if different for each tire.

The tire property estimation system 10 employs an experimentally determined method to determine a real time estimate of tire inflation pressure and tire tread depth. The system includes a sensor module 30 mounted on the wheel 22 or tire 12 of a vehicle. The sensor module 30 preferably includes a tri-axial accelerometer. The sensor module 30 may also be mounted on a lug nut, valve stem, rim, axle, hub, unsprung mass of the vehicle or vehicle suspension strut. It is preferred that the sensor module 30 be located on the wheel in an accessible position. The sensor module 30 includes a microprocessor, communication means such as blue tooth, or other wireless communication means, and data storage means. One sensor module 30 suitable for use with the invention is a Texas Instruments CC 2650 wireless MCU, sold by Texas Instruments.

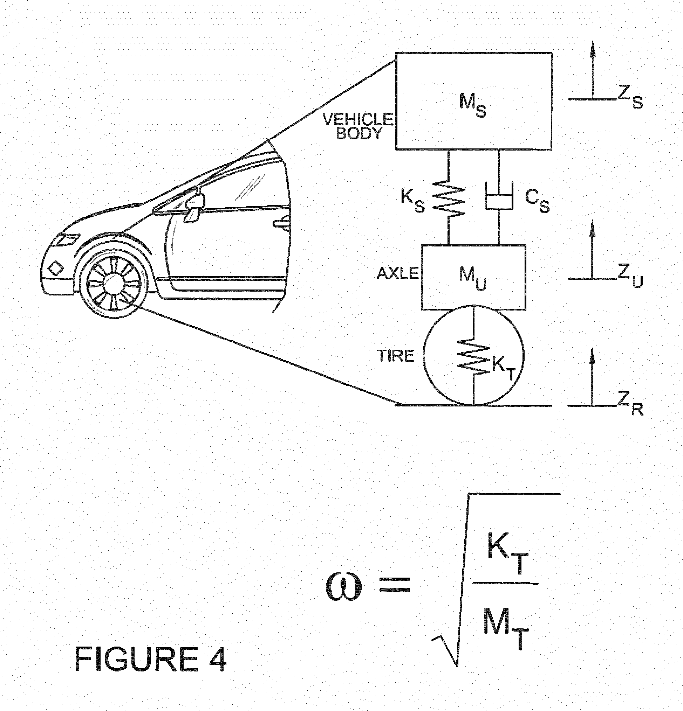

As shown in Figure 4, a wheel of a vehicle can be modeled as a spring mass damper system. For the tire vertical mode, the following equation holds:

$$\text{Vertical mode frequency } \omega = \text{square root of } k/m$$

where "k" is the tire carcass, inflation pressure dependent and m is the mass of the tire belt and tread mass. The dependence of tire wear (reduction in mass of the tread) and tire vertical mode of a rotating tire forms the basis for a correlation model between the tire wear state and the tire vertical mode frequency.

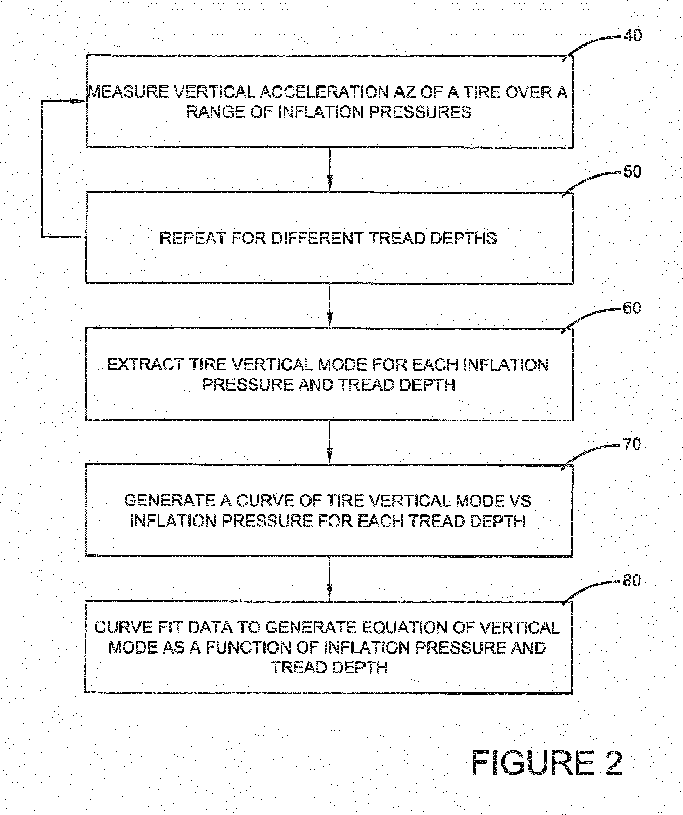

In order to determine a correlation model for a tire vertical mode frequency as a function of pressure and tread depth, the following steps are used to determine the correlation model. See Figure 2 which describes the steps. A first input signal 32 to the tire property estimation system 10 is preferably a vertical acceleration signal Az measured by the sensor 30. A second input to the system is tire ID. The system input may also optionally include wheel speed signal, as described in more detail, below.

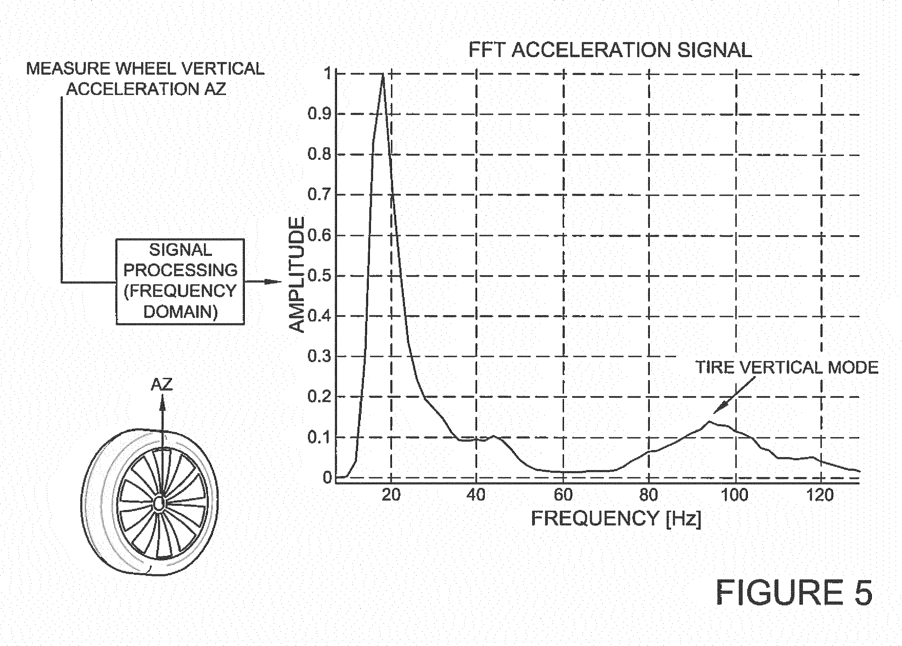

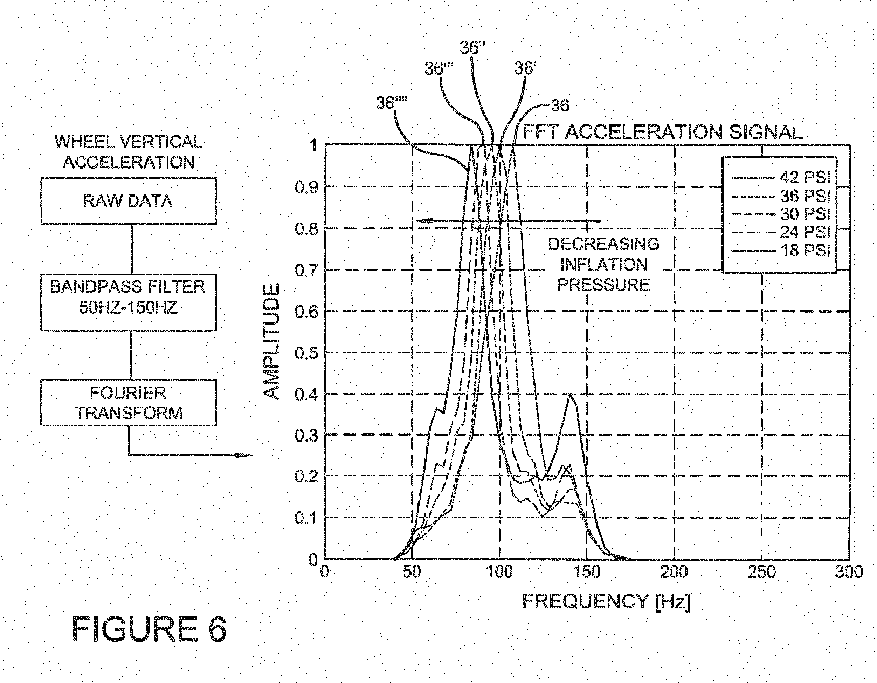

Figure 5 illustrates an exemplary vertical acceleration signal Az 32 shown in the frequency domain. The Az signal 32 has been processed in the frequency domain. As shown in figure 5, the signal illustrates the signal peak at 18 Hz known as wheel hop. Wheel hop is typically representative around 12-15 Hz and is the vibration of the tire belt and rim. The wheel hop vertical mode depends mainly on suspension spring properties supporting the test wheel and tire and the overall tire stiffness. The Az signal 32 also shows a second signal peek at 90 Hz known as tire vertical mode. The tire vertical mode is typically in the frequency range of 90-100 Hz, and is representative of the tire belt vertical vibration. Provertical mode extractions 28 are made, extracting tire vertical modes. The Az signal is processed by the microprocessor of the sensor module 30 using a bandpass filter in the 50-100 Hz range to isolate the tire vertical mode. The tire vertical mode was determined by means of an FFT (Fast Fourier Transform) analysis. The FFT analysis, conventionally used as a signal processing tool, yields tire vibration modes including the vertical mode represented in the subject graphs. As used herein, FFT is an algorithmic tool which operates by decomposing an $N$ point time domain signal into $N$ time domain signals each composed of a single point. The second step is to calculate the $N$ frequency spectra corresponding to these $N$ time domain signals. Lastly, the $N$ spectra are synthesized into a single frequency spectrum. Figure 6 illustrates the Az signal which has been processed as described. The peak of each curve 36 is then selected as representative of the tire vertical mode data point.

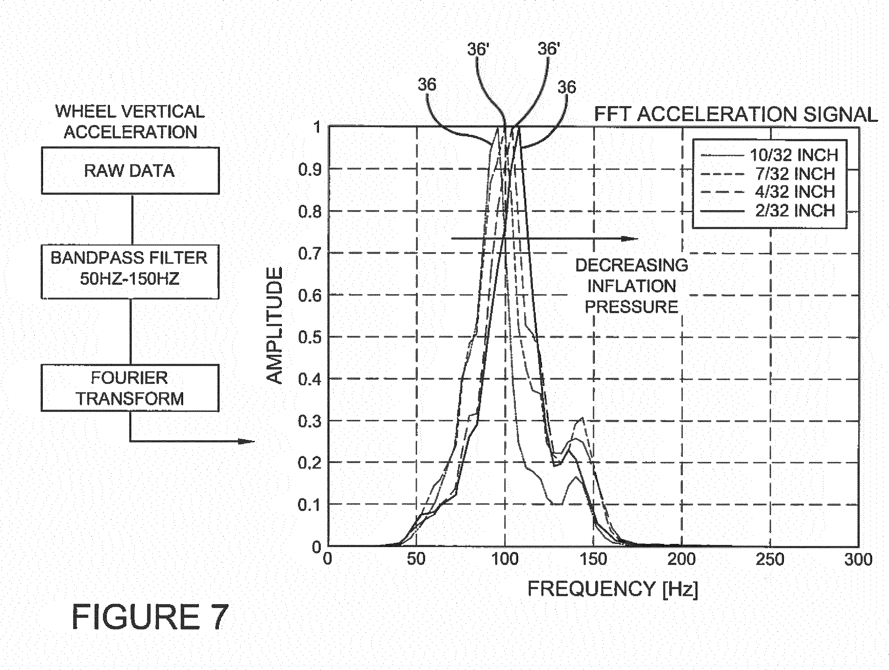

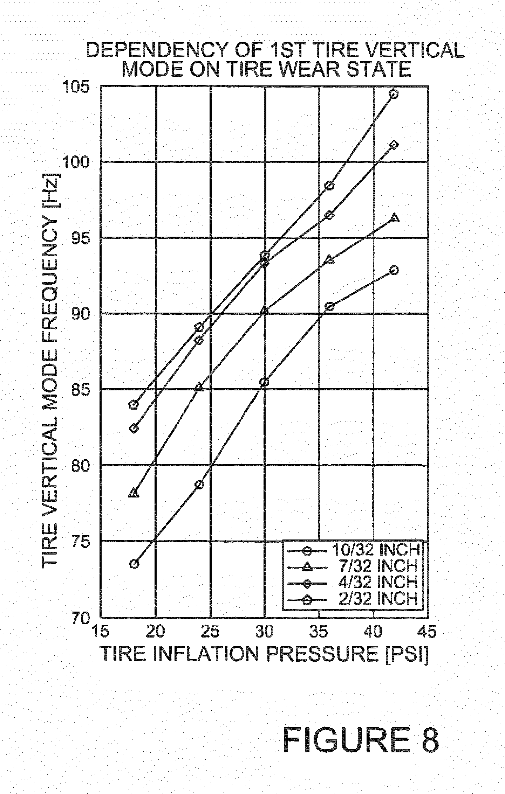

Figure 2 illustrates the steps to generate a correlation model of vertical mode as a function of pressure and tread depth. In order to generate a correlation model for a specific tire, a series of experiments is conducted as shown in Figures 6 and 7. As shown in Figure 6, a series of vertical acceleration measurements Az are made of the specific tire over a range of inflation pressures, 18, 24, 30, 36, and 42 psi (1 psi = 6895 Pa), step 40. These measurements are conducted at a known tread depth, in this case 2/32 inch (1 inch = 25.4 mm). The measurements are repeated at additional tread depths, step 50. The peak of the signal curve is then selected as representative of the tire vertical mode for each pressure and tread depth measured, (step 60). Step 70 is illustrated in figure 7, wherein a series of vertical acceleration measurements Az is made over a range of tread depths for a constant pressure. The peak of each signal curve is then selected to be representative of the tire vertical mode 36. Figure 8 illustrates the tire vertical mode curves for each tread depth measured, showing the variation of the tire vertical mode with tire inflation pressure, and illustrating a linear relationship. Figure 8 further illustrates for the exemplary data set that there is an approximate 10 Hz shift in resonance frequency for the 10/32 tread depth curve to the 2/32 tread depth curve. There is an approximate 20 Hz shift in resonance frequency for a given tread depth due to variation in tire inflation pressure.

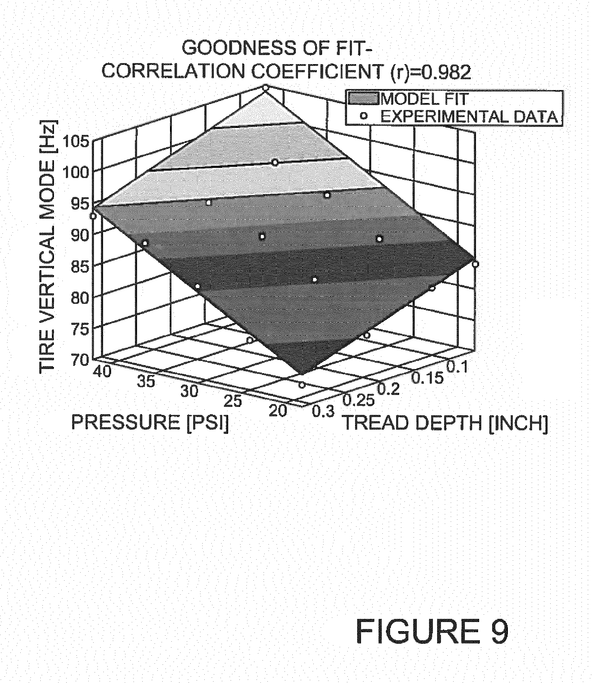

An exemplary test matrix of measurements used to determine the correlation model of vertical mode is shown in Figure 9. The data is curve fit to generate a single equation that is representative of the data. Figure 9 also illustrates a three-dimensional plot of the correlation model of tire vertical mode vs pressure and tread depth. For the data set shown in Figure 9, the correlation model equation is:

$$(1) \qquad \text{Vertical mode frequency} = Poo + P10*\text{Pressure} + P01*\text{tread depth}$$

wherein Poo is 72.87, p10 is .08011, and p01 is -39.41

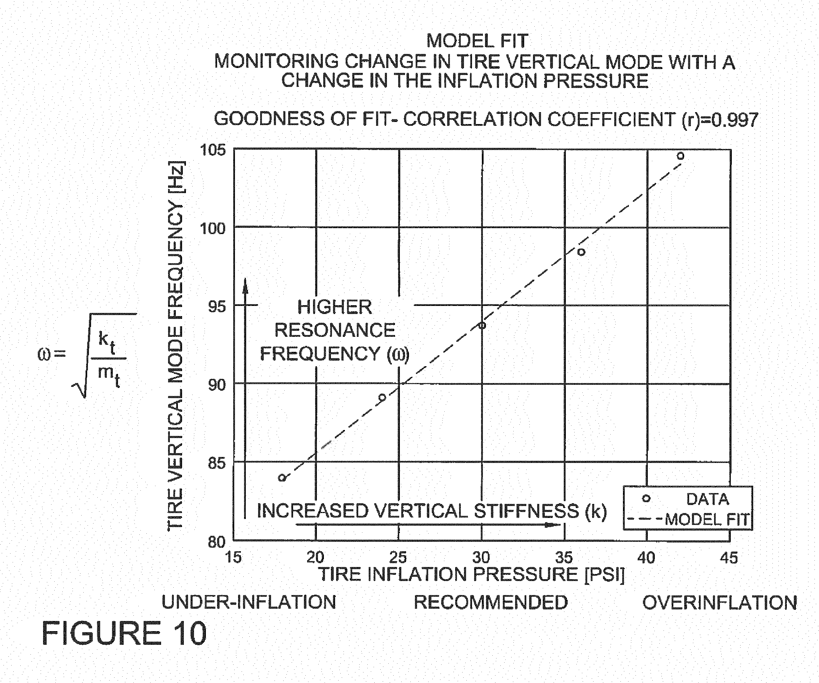

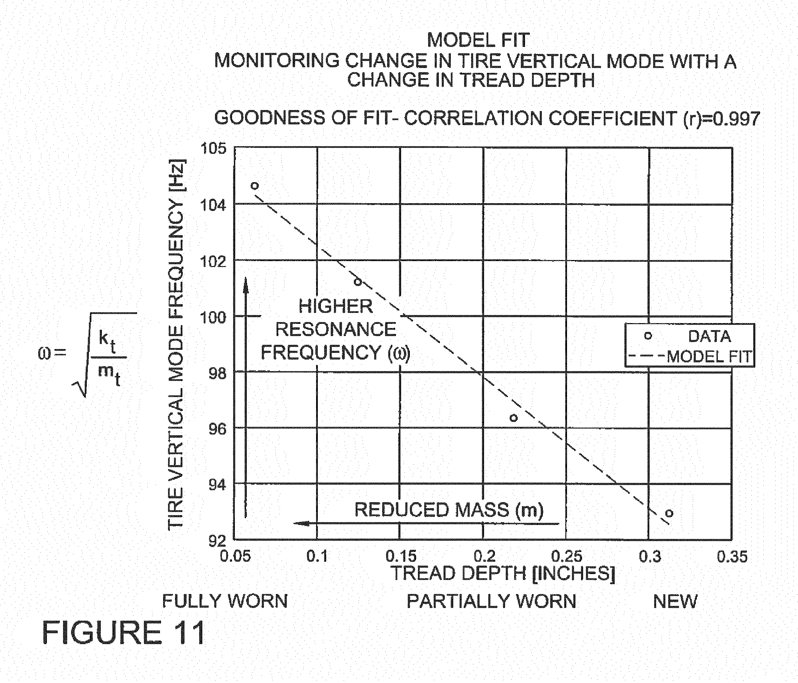

The correlation model as described above, is unique to a model and size of a tire. The steps are repeated for each tire as desired, and the coefficients are stored in a data matrix that correspond to the tire ID. Figures 10 and 11 illustrate validity of the correlation model. Figure 10 illustrates the goodness of fit for tire vertical mode frequency as a function of tire inflation pressure, illustrating a linear relationship and goodness of fit of 0.997. Figure 11 illustrates a goodness of fit for tire vertical mode frequency as a function of tread depth, with a correlation coefficient of 0.992. Thus, the spring mass damper model has been validated by experimental data.

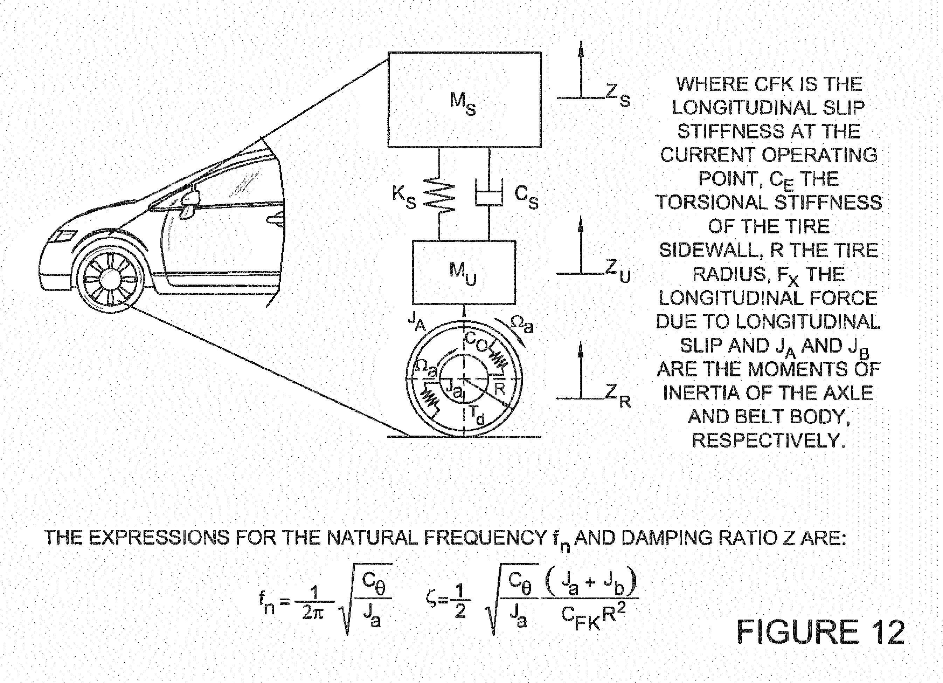

Figure 12 illustrates that the tire may also be modeled as a torsional spring mass damper system, wherein Ce is the torsional stiffness, and Ja is the moment of inertia of the axle. The equation is represented below:

$$(2) \qquad \text{natural frequency } Fn = 1/2\pi \sqrt{(C\theta/Ja)}$$

As equation 1 illustrates two unknowns, pressure and tread depth, a second equation is utilized to solve for the two unknowns. The second equation is a correlation model of the torsional mode which is a function of pressure and tread depth. Tire vertical modes are used to correlate the influence of the tire wear state (depth level of the tire tread 14) on the tire vertical mode by using spectral analysis methods.

Application 32 of a correlation model is made between the tire wear state and the tire vertical mode using the tire specific models developed from TPMS-facilitated tire identification information.

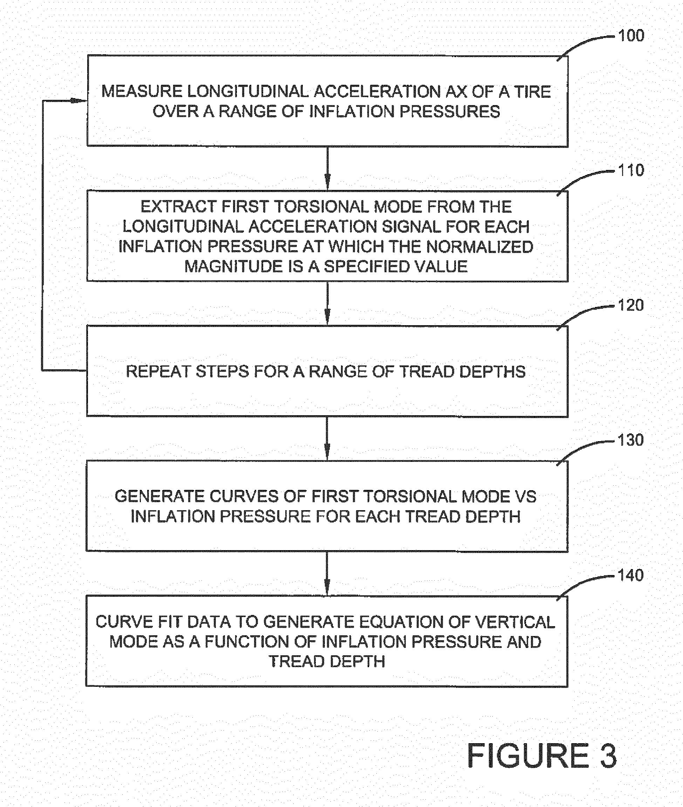

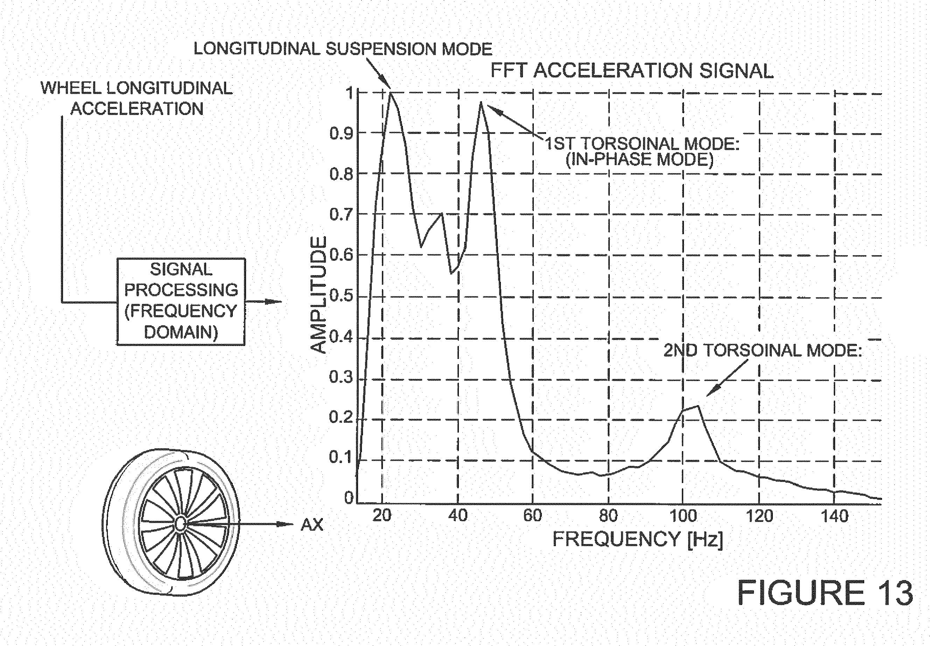

In order to determine the torsional mode correlation model, the longitudinal acceleration Ax signal 34 is analyzed as described in Figure 3. Figure 13 illustrates a typical FFT longitudinal acceleration Ax signal which has been processed using spectral analysis in the frequency domain. As shown in Figure 13, the first peak is the longitudinal suspension mode, the section peak is the first torsional in phase mode, and the third peak is the second torsional mode. Preferably, the first or second torsional mode is utilized to determine the torsional correlation model.

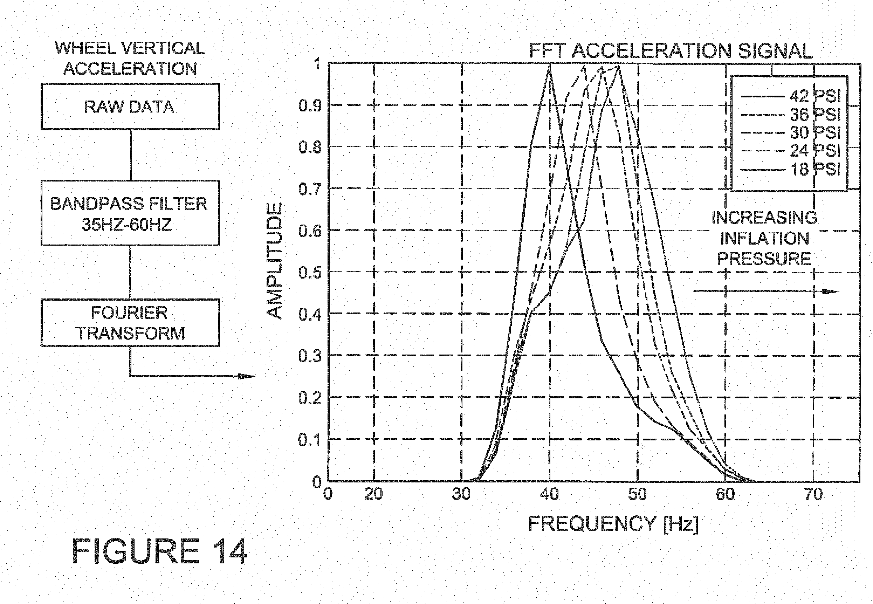

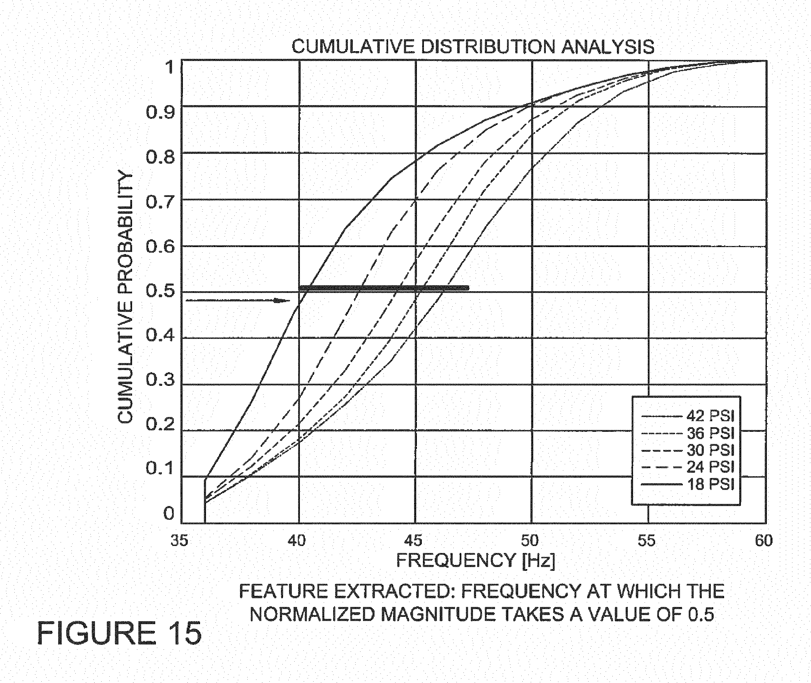

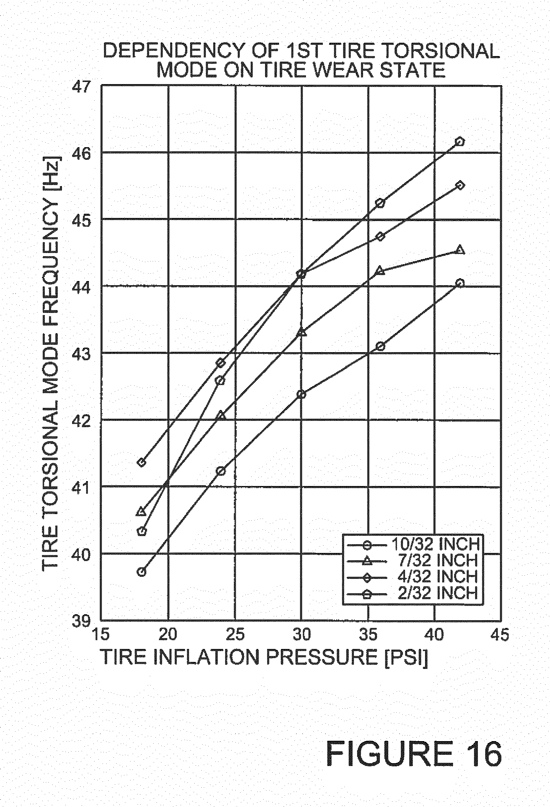

The first step 100 to determine the torsional mode correlation model is to measure the longitudinal acceleration signal Ax over a range of known inflation pressures for a known tread depth. Figure 14 illustrates that the FFT acceleration signal Ax has been processed using a bandpass filter of 35 -60 Hz and Fourier transform to extract the first torsional mode. The first torsional mode 105 may be selected at the peak of the curve or as shown in Figure 15, the first torsional mode may be the frequency at which a normalized magnitude takes a value in the range of 0.2-0.9. In this example, the torsional mode frequency step 110 is selected at a value of 0.5. Next, the steps described above are repeated for a range of tread depths (step 120). Figure 16 illustrates the first torsional mode for curves of varying tread depths, over a range of inflation pressures. Figure 16 further illustrates an approximate 2 Hz variation due to inflation pressure, and an approximate 2 Hz shift in resonance frequency due to tread depth.

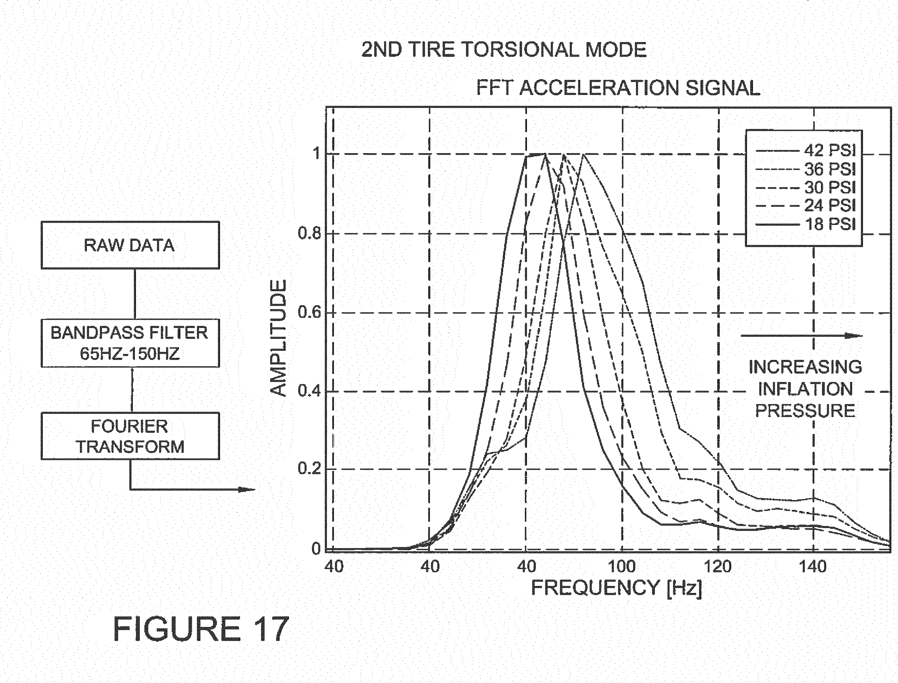

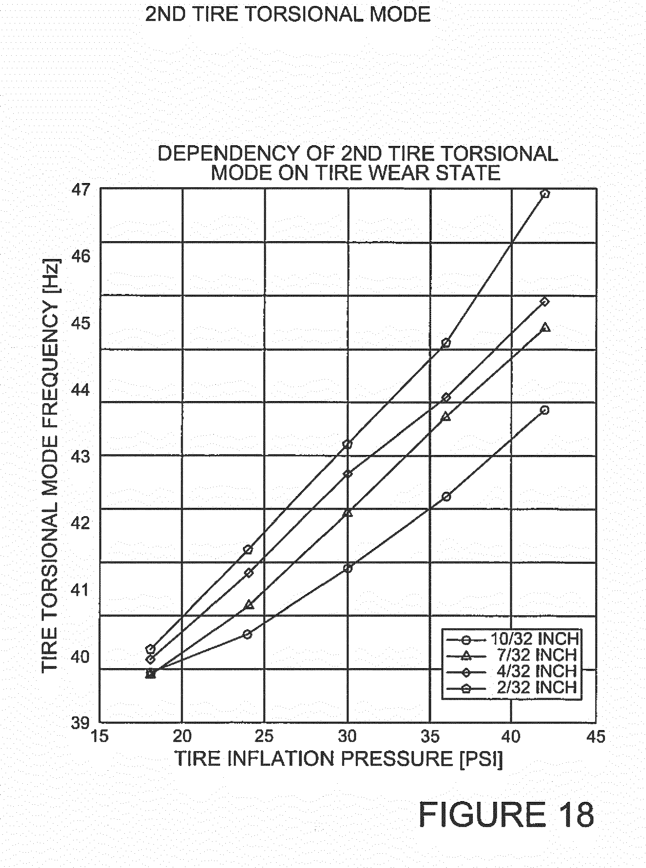

Figure 17 illustrates curves of the second torsional mode frequency versus frequency for various inflation pressures. Figure 18 illustrates the second torsional mode for curves of varying tread depths, over a range of inflation pressures. Figure 18 further illustrates an approximate 6-7 Hz shift in resonance frequency due to inflation pressure, and an approximate 3-5 Hz shift in resonance frequency due to tread depth. Thus, the second torsional mode is preferred as it has greater sensitivity.

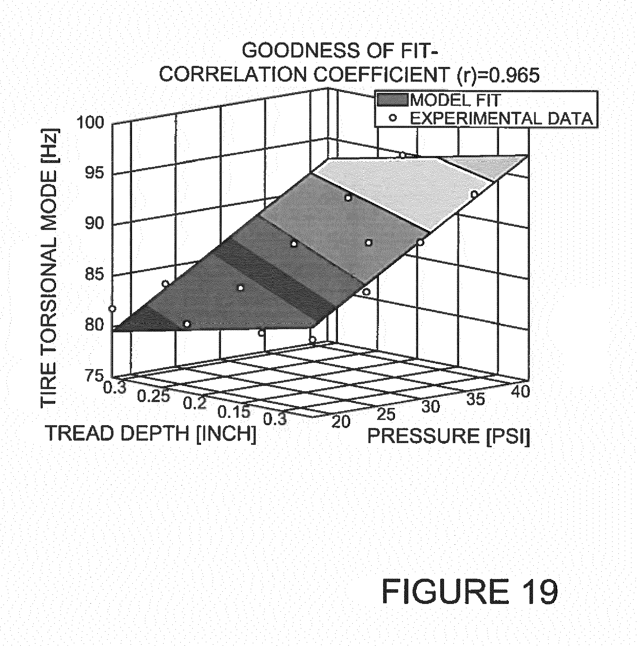

An exemplary test matrix of measurements used to determine the correlation model of torsional mode is shown in Figure 19. The data is curve fit to generate a single equation that is representative of the data. Figure 19 also illustrates a three-dimensional plot of the correlation model of tire torsional mode vs. pressure and tread depth. For the data set shown in Figure 19, the correlation model equation is:

$$(3) \qquad \text{Torsional mode frequency} = Poo + P10*Pressure + P01*tread\ depth$$

wherein Poo is 74.85, p10 is 0.5586, and p01 is -17.15

The torsional correlation model as described above, is unique to a model and size of a tire. The steps are repeated for each tire as desired, and the coefficients are stored in a data matrix that correspond to the tire ID.

Figure 1 illustrates how the vertical mode and torsional mode correlation models are utilized in a real time system. First, the tire ID is input into the system. Next, the sensor module 30 senses the vertical acceleration Az 32 and the longitudinal acceleration Ax 34. Then, the signals are processed by the microprocessor of the sensor module to filter, and perform the FFT analysis to extract the vertical mode and torsional mode, preferably the second torsional mode. Next, the vertical mode and the torsional mode is input into the correlation models equations 1 and 3. The microprocessor solves the equations to determine pressure and tread depth step 230, and then communicates the pressure and tread depth output to a user, and/or to a cellular phone, and/or to the vehicle.

**Claims**

1. A tire state estimation system for determining pressure and tread depth of a tire (12), **characterized in that** said system (10) comprises:

at least one tire (12) supporting a vehicle, the tire (12) having a tire ID (20);
tire vertical mode measuring means for measuring a tire vertical mode frequency and generating tire vertical mode frequency data;
tire torsional mode measuring means for measuring a tire torsional mode frequency and generating tire vertical mode frequency data;
tire identification means for generating tire-specific frequency mode coefficients using tire-specific identification data; and
tire state estimation means for calculating an estimation of a tire wear state and inflation pressure based upon the vertical mode frequency data, the torsional mode frequency data and the tire-specific frequency mode coefficients.

2. The tire state estimation system of claim 1, wherein the measurement of the tire vertical mode frequency is from a wheel-mounted or a rim-mounted accelerometer (30).

3. The tire state estimation system of claim 1 or 2, wherein the measurement of the tire torsional mode frequency is from a wheel-mounted or a rim-mounted accelerometer (30).

4. The tire state estimation system of at least one of the previous claims, wherein the tire state estimation means comprises a correlation model of the tire vertical mode as a function of inflation pressure and tread wear.

5. The tire wear state estimation system of at least one of the previous claims, wherein the tire state estimation means comprises a correlation model of the tire torsional mode as a function of inflation pressure and tread wear.

6. A method estimating tire inflation pressure and a tread depth of a tire (12), the method comprising the steps of:

affixing a sensor (30);
measuring a tire vertical mode frequency and generating tire vertical mode frequency data;
measuring a tire torsional mode frequency and generating tire torsional mode frequency data;
generating tire-specific frequency mode coefficients using tire-specific identification data; and
calculating an estimation of a tread depth and inflation pressure based upon the torsional mode frequency data, the vertical mode frequency data, and the tire-specific frequency mode coefficients.

7. The method of claim 6, further comprising generating the tire-specific frequency mode coefficients using on-vehicle or in-tire measurement of a tire vertical mode frequency.

8. The method of claim 6 or 7 wherein the sensor is affixed to a wheel (22) or rim on which the tire (12) is mounted or can be mounted.

**Patentansprüche**

1. Reifenzustandsschätzsystem zum Bestimmen eines Drucks und einer Profiltiefe eines Reifens (12), **dadurch gekennzeichnet, dass** das System (10) Folgendes umfasst:

wenigstens einen Reifen (12), der ein Fahrzeug trägt, wobei der Reifen (12) eine Reifen-ID (20) aufweist;
Reifenvertikalmodenmessmittel zum Messen einer Reifenvertikalmodenfrequenz und zum Erzeugen von Reifenvertikalmodenfrequenzdaten;
Reifentorsionsmodenmessmittel zum Messen einer Reifentorsionsmodenfrequenz und zum Erzeugen von Reifenvertikalmodenfrequenzdaten;
Reifenidentifikationsmittel zum Erzeugen reifenspezifischer Frequenzmodenkoeffizienten unter Verwendung reifenspezifischer Identifikationsdaten; und
Reifenzustandsschätzmittel zum Berechnen einer Schätzung eines Reifenverschleißzustands und eines Fülldrucks basierend auf den Vertikalmodenfrequenzdaten, den Torsionsmodenfrequenzdaten und den reifenspezifischen Frequenzmodenkoeffizienten.

2. Reifenzustandsschätzsystem nach Anspruch 1, wobei die Messung der Reifenvertikalmodenfrequenz von einem auf einem Rad montierten oder einem auf einer Felge montierten Beschleunigungsmesser (30) ist.

**3.** Reifenzustandsschätzsystem nach Anspruch 1 oder 2, wobei die Messung der Reifentorsionsmodenfrequenz von einem auf einem Rad montierten oder einem auf einer Felge montierten Beschleunigungsmesser (30) ist.

**4.** Reifenzustandschätzsystem nach wenigstens einem der vorhergehenden Ansprüche, wobei das Reifenzustandsschätzmittel ein Korrelationsmodell des Reifenvertikalmode in Abhängigkeit von dem Fülldruck und dem Laufflächenverschleiß umfasst.

**5.** Reifenverschleißschätzsystem nach wenigstens einem der vorhergehenden Ansprüche, wobei das Reifenzustandsschätzmittel ein Korrelationsmodell des Reifentorsionsmode in Abhängigkeit von dem Fülldruck und dem Laufflächenverschleiß umfasst.

**6.** Verfahren zum Schätzen eines Reifenfülldrucks und einer Profiltiefe eines Reifens (12), wobei das Verfahren die folgenden Schritte umfasst:

Anbringen eines Sensors (30);
Messen einer Reifenvertikalmodenfrequenz und Erzeugen von Reifenvertikalmodenfrequenzdaten;
Messen einer Reifentorsionsmodenfrequenz und Erzeugen von Reifentorsionsmodenfrequenzdaten;
Erzeugen reifenspezifischer Frequenzmodenkoeffizienten unter Verwendung reifenspezifischer Identifikationsdaten; und
Berechnen einer Schätzung einer Profiltiefe und eines Fülldrucks basierend auf den Torsionsmodenfrequenzdaten, den Vertikalmodenfrequenzdaten und den reifenspezifischen Frequenzmodenkoeffizienten.

**7.** Verfahren nach Anspruch 6, ferner umfassend das Erzeugen der reifenspezifischen Frequenzmodenkoeffizienten unter Verwendung einer fahrzeuginternen oder reifeninternen Messung einer Reifenvertikalmodenfrequenz.

**8.** Verfahren nach Anspruch 6 oder 7, wobei der Sensor an einem Rad (22) oder einer Felge, auf der der Reifen (12) montiert ist oder montiert werden kann, angebracht ist.

**Revendications**

**1.** Système d'estimation de l'état d'un bandage pneumatique destiné à déterminer la pression et la profondeur de sculpture d'un bandage pneumatique (12), **caractérisé en ce que** le système (10) comprend :

au moins un bandage pneumatique (12) supportant un véhicule, le bandage pneumatique (12) possédant une identification de bandage pneumatique (20) ;
un moyen de mesure du mode vertical du bandage pneumatique destiné à mesurer une fréquence en mode vertical du bandage pneumatique et à générer les données de fréquences en mode vertical du bandage pneumatique ;
un moyen de mesure en mode de torsion du bandage pneumatique destiné à mesurer une fréquence en mode de torsion du bandage pneumatique et à générer les données de fréquence en mode de torsion du bandage pneumatique ;
un moyen d'identification du bandage pneumatique destiné à générer des coefficients de mode de fréquence spécifiques au bandage pneumatique en utilisant des données d'identification spécifiques au bandage pneumatique ; et
un moyen d'estimation de l'état du bandage pneumatique destiné à calculer une estimation d'un état d'usure du bandage pneumatique et d'une pression de gonflage en se basant sur les données de fréquence en mode vertical, sur les données de fréquence en mode de torsion et sur les coefficients de mode de fréquence spécifiques au bandage pneumatique.

**2.** Système d'estimation de l'état d'un bandage pneumatique selon la revendication 1, dans lequel la mesure de la fréquence en mode vertical du bandage pneumatique s'effectue à partir d'un accéléromètre (30) monté sur une roue ou monté sur une jante.

**3.** Système d'estimation de l'état d'un bandage pneumatique selon la revendication 1 ou 2, dans lequel la mesure de la fréquence en mode de torsion du bandage pneumatique s'effectue à partir d'un accéléromètre (30) monté sur une roue ou monté sur une jante.

4. Système d'estimation de l'état d'un bandage pneumatique selon au moins une des revendications précédentes, dans lequel le moyen d'estimation de l'état du bandage pneumatique comprend un modèle de corrélation du mode vertical du bandage pneumatique en fonction de la pression de gonflage et de l'usure de la bande de roulement.

5. Système d'estimation de l'état d'un bandage pneumatique selon au moins une des revendications précédentes, dans lequel le moyen d'estimation de l'état du bandage pneumatique comprend un modèle de corrélation du mode de torsion du bandage pneumatique en fonction de la pression de gonflage et de l'usure de la bande de roulement.

6. Procédé d'estimation de la pression de gonflage d'un bandage pneumatique et d'une profondeur de sculpture d'un bandage pneumatique (12), le procédé comprenant les étapes consistant à :

   fixer un capteur (30) ;
   mesurer une fréquence en mode vertical du bandage pneumatique et générer les données de fréquences en mode vertical du bandage pneumatique ;
   mesurer une fréquence en mode de torsion du bandage pneumatique et à générer les données de fréquence en mode de torsion du bandage pneumatique ;
   générer des coefficients de mode de fréquence spécifiques au bandage pneumatique en utilisant des données d'identification spécifiques au bandage pneumatique ; et
   calculer une estimation d'un état d'usure du bandage pneumatique et d'une pression de gonflage en se basant sur les données de fréquence en mode vertical, sur les données de fréquence en mode de torsion et sur les coefficients de mode de fréquence spécifiques au bandage pneumatique.

7. Procédé selon la revendication 6, comprenant en outre le fait de générer les coefficients de mode de fréquence spécifiques au bandage pneumatique en utilisant une mesure réalisée sur le véhicule dans le véhicule d'une fréquence en mode vertical du bandage pneumatique.

8. Procédé selon la revendication 6 ou 7, dans lequel le capteur est fixé à une roue (22) ou à une jante sur laquelle le bandage pneumatique (12) est monté ou peut-être monté.

EP 3 330 106 B1

INPUT TIRE ID — 20

SENSE VERTICAL ACCELERATION AZ — 32

SENSE LONGITUDINAL ACCELERATION AX — 34

EXTRACT VERTICAL MODE OF AZ SIGNAL — 200

EXTRACT TORSIONAL MODE OF AX SIGNAL — 210

APPLY A CORRELATION MODEL OF THE FIRST VERTICAL MODE AND THE TORSIONAL MODE AS A FUNCTION OF PRESSURE AND TREAD DEPTH — 220

DETERMINE THE INFLATION PRESSURE AND TREAD DEPTH FROM THE CORRELATION MODEL — 230

COMMUNICATE OUTPUT RESULTS — 240

FIGURE 1

FIGURE 2

100

MEASURE LONGITUDINAL ACCELERATION AX OF A TIRE
OVER A RANGE OF INFLATION PRESSURES

110

EXTRACT FIRST TORSIONAL MODE FROM THE
LONGITUDINAL ACCELERATION SIGNAL FOR EACH
INFLATION PRESSURE AT WHICH THE NORMALIZED
MAGNITUDE IS A SPECIFIED VALUE

120

REPEAT STEPS FOR A RANGE OF TREAD DEPTHS

130

GENERATE CURVES OF FIRST TORSIONAL MODE VS
INFLATION PRESSURE FOR EACH TREAD DEPTH

140

CURVE FIT DATA TO GENERATE EQUATION OF VERTICAL
MODE AS A FUNCTION OF INFLATION PRESSURE AND
TREAD DEPTH

# FIGURE 3

$$\omega = \sqrt{\dfrac{K_T}{M_T}}$$

FIGURE 4

MEASURE WHEEL VERTICAL ACCELERATION AZ

SIGNAL PROCESSING (FREQUENCY DOMAIN)

AZ

FFT ACCELERATION SIGNAL

TIRE VERTICAL MODE

AMPLITUDE

FREQUENCY [Hz]

FIGURE 5

EP 3 330 106 B1

FIGURE 6

EP 3 330 106 B1

WHEEL VERTICAL
ACCELERATION

RAW DATA

BANDPASS FILTER
50HZ-150HZ

FOURIER
TRANSFORM

FFT ACCELERATION SIGNAL

36'    36'
36          36

DECREASING
INFLATION
PRESSURE

10/32 INCH
7/32 INCH
4/32 INCH
2/32 INCH

AMPLITUDE

FREQUENCY [Hz]

FIGURE 7

EP 3 330 106 B1

DEPENDENCY OF 1ST TIRE VERTICAL MODE ON TIRE WEAR STATE

FIGURE 8

FIGURE 9

MODEL FIT
MONITORING CHANGE IN TIRE VERTICAL MODE WITH A
CHANGE IN THE INFLATION PRESSURE

GOODNESS OF FIT- CORRELATION COEFFICIENT (r)=0.997

$$\omega = \sqrt{\frac{k_t}{m_t}}$$

HIGHER
RESONANCE
FREQUENCY (ω)

INCREASED VERTICAL STIFFNESS (k)

| | DATA |
|---|---|
| --- | MODEL FIT |

X-axis: TIRE INFLATION PRESSURE [PSI]
Y-axis: TIRE VERTICAL MODE FREQUENCY [Hz]

UNDER-INFLATION          RECOMMENDED          OVERINFLATION

FIGURE 10

EP 3 330 106 B1

MODEL FIT
MONITORING CHANGE IN TIRE VERTICAL MODE WITH A
CHANGE IN TREAD DEPTH

GOODNESS OF FIT- CORRELATION COEFFICIENT (r)=0.997

$$\omega = \sqrt{\frac{k_t}{m_t}}$$

FIGURE 11

EP 3 330 106 B1

WHERE CFK IS THE LONGITUDINAL SLIP STIFFNESS AT THE CURRENT OPERATING POINT, $C_E$ THE TORSIONAL STIFFNESS OF THE TIRE SIDEWALL, R THE TIRE RADIUS, $F_X$ THE LONGITUDINAL FORCE DUE TO LONGITUDINAL SLIP AND $J_A$ AND $J_B$ ARE THE MOMENTS OF INERTIA OF THE AXLE AND BELT BODY, RESPECTIVELY.

THE EXPRESSIONS FOR THE NATURAL FREQUENCY $f_n$ AND DAMPING RATIO Z ARE:

$$f_n = \frac{1}{2\pi}\sqrt{\frac{C_\theta}{J_a}} \qquad \zeta = \frac{1}{2}\sqrt{\frac{C_\theta}{J_a}\frac{(J_a + J_b)}{C_{FK}R^2}}$$

FIGURE 12

FIGURE 13

EP 3 330 106 B1

FIGURE 14

EP 3 330 106 B1

FIGURE 15

DEPENDENCY OF 1ST TIRE TORSIONAL MODE ON TIRE WEAR STATE

FIGURE 16

## 2ND TIRE TORSIONAL MODE

### FFT ACCELERATION SIGNAL

FIGURE 17

EP 3 330 106 B1

2ND TIRE TORSIONAL MODE

DEPENDENCY OF 2ND TIRE TORSIONAL
MODE ON TIRE WEAR STATE

FIGURE 18

GOODNESS OF FIT-
CORRELATION COEFFICIENT (r)=0.965

FIGURE 19

FIGURE 20

FIGURE 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2813378 A1
- EP 2837510 A
- DE 102008056664 A1
- US 20030192375 A1